# EUROPÄISCHE PATENTANMELDUNG

(11) **EP 4 772 396 A1**
(43) Veröffentlichungstag der Anmeldung: **08.07.2026**
(21) Anmeldenummer: 26150450.0
(22) Anmeldetag: 07.01.2026
(51) Int. Cl.: B60P 7/08

(54) **HALTEVORRICHTUNG UND VERFAHREN ZUM SICHERN EINER AUF EINEM TRANSPORTMITTEL ZU TRANSPORTIERENDEN LADUNG**

(30) Priorität: 07.01.2025 DE 102025100270
(71) Anmelder: allsafe GmbH & Co. KG, 78234 Engen (DE)
(72) Erfinder: NASR, Yassir, 78234 Engen (DE)
(74) Vertreter: Patentanwälte und Rechtsanwalt Weiß, Arat & Partner mbB

(57) **Zusammenfassung**

Die vorliegende Erfindung betrifft eine Haltevorrichtung zumindest zum Sichern einer mit einem Transportmittel zu transportierenden Ladung, wobei die Haltevorrichtung wenigstens ein Basiselement zumindest zur zeitweisen Anordnung der Haltevorrichtung an dem Transportmittel, sowie ein zumindest eine Schlaufe bildendes Halteband und ein wenigstens das Halteband positionierendes und vom Basiselement zumindest abschnittsweise gehaltenes Positionierelement aufweist. Ferner betrifft die Erfindung ein Verfahren zumindest zum Sichern einer mit einem Transportmittel zu transportierenden Ladung mittels der vorgenannten Haltevorrichtung mit zumindest den folgenden Schritten:
- Anordnen der Haltevorrichtung im oder am Transportmittel,
- Bildung wenigstens einer Schlaufe im Halteband durch Ziehen eines sich an der Oberseite des Positionierabschnittes befindlichen sichtbaren Kontaktabschnittes des Haltebandes und
- Einhängen von sekundären Ladungssicherungselementen in die wenigstens eine Schlaufe.

## Beschreibung

Die vorliegende Erfindung betrifft eine Haltevorrichtung zum Sichern einer auf einem Transportmittel zu transportierenden Ladung. Ferner betrifft die Erfindung ein Verfahren zum Sichern einer auf einem Transportmittel zu transportierenden Ladung mittels einer Haltevorrichtung.

### STAND DER TECHNIK

Lastenhebegurte, wie beispielsweise in der DE 3609163 A1 beschrieben, sind allgemein bekannt. Oftmals bestehen diese aus einem Gurtband, an dessen Enden Schlaufen, zum beispielsweise Einhängen des Gurtbandes in einen Kranhaken, angebracht sind. Hierdurch können Lasten insbesondere in die Höhe gehoben werden. Auch Spanngurte, welche an deren Enden Haken oder Ösen oder vergleichbaren Vorrichtungen aufweisen, die in entsprechende Halteschienen eingreifen müssen, um eine Verpannung der zu sichernden Ladung zu ermöglichen, sind ebenfalls hinreichend allgemein bekannt. Bei der Nutzung derartiger Spanngurte bedarf es jedoch immer einem fixiert im Frachtraum angeordnetem Halte- oder Profilschienenelement. Dieses muss mit dem Boden, der Decke oder den Wänden des Frachtraumes fest verbunden werden, um eine entsprechende Sicherung zu ermöglichen. Eine individuelle und flexible an die zu sichernde Ladung angepasste Positionierung der Profilschienenelemente innerhalb des Frachtraums ist aber nicht mehr möglich.

Wie in der WO 01/68401 A1 beschrieben, werden insbesondere im Bereich der Luftfrachttransporte Spann- oder Transportgurte zur Befestigung bzw. Sicherung des Transportgutes verwendet. Derartige Transportgurte weisen beispielsweise Eingriffsteile mit pilzkopfförmigen Eingriffsstempeln auf, welche in entsprechende flugzeugfeste Schlossprofile oder Profilschienen, die an den Frachtpaletten zur Aufnahme der entsprechenden Eingriffsstempel vorgesehen sind, eingesetzt und verriegelt werden. Ohne entsprechende Gegenstücke, wie beispielsweise die fest verbauten Profilschienen, ist eine Sicherung der Last nicht möglich. Zudem sind definiert ausgebildete Eingriffsstempel erforderlich.

Eine weitere ein bandartiges Element aufweisende Befestigungsvorrichtung zur Sicherung von Ladegut im Gepäckraum eines Transportmittels ist in der DE 202005008096 U1 beschrieben. Die Befestigungsvorrichtung weist ein Schienenelement zur Montage in dem Boden oder der Wandung des Gepäckraumes sowie ein Befestigungselement auf. Das Befestigungselement besteht aus einem Sockelelement, welches in dem Schienenelement längs verschiebbar geführt ist und einem haken- oder ösanartigen aus dem Schienenelement herausragenden Befestigungsteil. Das bandartige Element dient als Abdeckelement zum Verschließen der Nut des Schienenelementes, wobei dieses mit dessen Enden am Befestigungselement fixiert und durch Umlenkelemente im Endbereich des Schienenelementes bei Verschiebung des Befestigungselementes umlaufend geführt ist. Für die Fixierung des Befestigungselementes in der Schiene bedarf es zudem weiterer Vorrichtungen und Elemente. Zudem wird hierdurch lediglich ein einzelner Befestigungspunkt ermöglicht.

### OFFENBARUNG DER ERFINDUNG

Es ist daher die Aufgabe der vorliegenden Erfindung, die voranstehend beschriebenen Nachteile bei einer Haltevorrichtung zum Sichern von einer auf einem Transportmittel zu transportierenden Ladung zumindest teilweise zu beheben. Insbesondere ist es die Aufgabe der vorliegenden Erfindung eine Haltevorrichtung und ein Verfahren zum Sichern von einer auf einem Transportmittel zu transportierenden Ladung zu schaffen, die in einer einfachen und kostengünstigen Art und Weise auch in Planfahrzeugen, also insbesondere in keinen festen Wandungen und/oder Decken aufweisenden Transportmitteln verwendbar, insbesondere nachrüstbar ist und vorteilhaft flexibel an die Position und Menge der zu sichernden Ladung im Laderaum positioniert und/oder ausgerichtet werden kann.

Die voranstehende Aufgabe wird gelöst durch eine Haltevorrichtung zum Sichern von einer auf einem Transportmittel zu transportierenden Ladung mit den Merkmalen des Anspruchs 1 sowie durch ein Verfahren zum Sichern von einer auf einem Transportmittel zu transportierenden Ladung mittels einer Haltevorrichtung mit den Merkmalen gemäß Anspruch 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Haltevorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Die erfindungsgemäße Haltevorrichtung dient zumindest zum Sichern einer mit einem Transportmittel zu transportierenden Ladung und weist wenigstens ein Basiselement zumindest zur zeitweisen Anordnung der Haltevorrichtung an dem Transportmittel, sowie ein zumindest eine Schlaufe bildendes Halteband und ein wenigstens das Halteband positionierendes und vom Basiselement zumindest abschnittsweise gehaltenes Positionierelement auf. Als Transportmittel sind hierbei beispielsweise Lastkraftwagen, Anhänger, Luftfahrzeuge, Wasserfahrzeuge usw. zu verstehen, insbesondere alle Transportmittel, die dazu dienen eine Ladung zu transportieren. Auch Lastenräder oder Karren etc. können hierunter verstanden werden. Die Haltevorrichtung ist vorteilhaft in Gestalt eines Seitenbrettes, Spriegelbrettes, Rungenbrettes bzw. Einsteckbrettes ausgebildet. Transportmittel, wie beispielsweise Lastkraftwagen, welche keine festen Fahrzeugaufbauten in Form von Stirnwand, Seitenwänden und Rückwand, insbesondere (Kühl-)Kofferaufbauten besitzen, mittels denen eine zu transportierende Ladung gegen Verrutschen oder Verkippen (zusätzlich) gesichert werden kann, weisen Rungen bzw. Dachstützen auf, die sich ausgehend vom Boden des Ladungsraumes vertikal nach oben erstrecken und dort zumeist ein fest installiertes Dach stützen. Diese Rungen sind beabstandet zueinander an der Außenseite der Ladefläche an dessen Seitenfläche angeordnet und dienen unter anderem dazu Spriegelbretter in definierter Höhe übereinander aufzunehmen. Diese Spriegelbretter erstrecken sich folglich jeweils im Wesentlichen horizontal zwischen zwei Rungen entlang der Seite des Transportmittels (in Fahrtrichtung), vorteilhaft eines Lastkraftwagens oder Anhängers. Allgemein bekannte Spriegelbretter sind aus einem Holzwerkstoff oder aus Aluminium gefertigt. Die Spriegelbretter werden in Aufnahmeelemente der Rungen eingehängt und dort vorteilhaft gegen Herausrutschen gesichert. Zusätzlichen Schutz vor Beschädigung oder Verschmutzung der zu transportierenden Ladung bietet in derartigen Curtainsider-Fahrzeugen, also Planenfahrzeugen bzw. Planenaufliegern die Planen bzw. Schiebeplanen. Die erfindungsgemäße Haltevorrichtung kann demzufolge in Gestalt eines Spriegelbrettes ausgebildet und zwischen zwei Rungen einen Planenfahrzeuges oder Planenaufliegers bzw. Planenanhängers eingebracht werden. Es ist jedoch auch denkbar, dass die erfindungsgemäße Haltevorrichtung an einen festen Fahrzeugaufbau, wie eine Seitenwand oder an einem Boden oder eine Decke eines Transport- bzw. Laderaumes mittels beispielsweise lösbarer oder unlösbarer Verbindung fixiert ist. Als lösbare Verbindungen können dabei beispielsweise Schraub-, Stift oder Nietverbindungen dienen, wobei als unlösbare Verbindungen beispielsweise Verklebungen oder ein zumindest teilweises Einschäumen denkbar ist. Vorteilhaft ist die erfindungsgemäße Haltevorrichtung in einfacher und kostengünstiger Weise in unterschiedliche Transportmittel unterschiedlichster Ausgestaltung nachrüstbar. In einfachster Weise wird die erfindungsgemäße Haltevorrichtung in Gestalt eines Spriegelbrettes eingebracht und ersetzt das bisher verwendete Seitenbrett aus Holz oder Aluminium.

Die erfindungsgemäße Haltevorrichtung weist vorteilhaft zumindest drei miteinander in Wirkverbindung stehende Elemente auf. Das Basiselement der Haltevorrichtung dient vorteilhaft dazu eine Verbindung der Haltevorrichtung mit dem Transportmittel zu ermöglichen. Es ist bei einer Ausgestaltung der Haltevorrichtung als Spriegelbrett folglich derjenige Bestandteil, welcher eine hinreichende Steifigkeit aufweist und zwischen die Rungen derart in die Aufnahmeeinrichtungen der Rungen eingebracht ist, dass weitere Halteeinrichtungen, wie Spanngurte, Stangen oder Balken ladungssichernd angeordnet werden können. Dafür weist das Basiselement eine in Längsrichtung der Haltevorrichtung betrachtete Länge auf, die vorteilhaft um ein Vielfaches (beispielsweise um ein dreifaches, vierfaches, fünffaches oder größer) größer ist als die in Breitenrichtung der Haltevorrichtung betrachtete Breite. Das Basiselement weist demnach vorteilhaft eine im Wesentlichen rechteckförmige Gestalt auf. Das Basiselement besteht vorteilhaft aus einem metallischen Werkstoff, wie Aluminium oder Stahl. Das Positionierelement ist vorteilhaft zumindest abschnittsweise vom Basiselement gehalten. Das Basiselement kann dabei das Positionierelement verschiebefest fixieren, vorteilhaft aber verschiebbar oder gleitend aufnehmen. Das Positionierelement dient dazu das Halteband aufzunehmen bzw. zu positionieren. Das Positionierelement ist beispielsweise aus einem metallischen Werkstoff, wie Aluminium oder Stahl hergestellt. Es ist denkbar, dass das Basiselement und das Positionierelement einteilig oder einstückig ausgebildet sind. Vorteilhaft handelt es sich hierbei jedoch um zwei separate Bauteile, welche miteinander in Wirkverbindung gebracht sind. Das Basiselement und das Positionierelement sind in Längsrichtung der Haltevorrichtung betrachtet vorteilhaft gleich lang ausgebildet. Es ist jedoch alternativ denkbar, dass das Positionierelement in Längsrichtung der Haltevorrichtung betrachtet kürzer ausgebildet ist als das Basiselement. Das Halteband dient vorteilhaft dazu zumindest eine Schlaufe zu bilden. Die wenigstens eine Schlaufe, welche sich zumindest abschnittsweise vom Positionierelement weg erstreckt, dient vorteilhaft dazu einen Haken, einen Karabiner oder vergleichbare Bauteile weiterer (ergänzender) Ladungssicherungsbauteile aufzunehmen. Demnach können weitere Ladungssicherungsbauteile mit dem Halteband, insbesondere der wenigstens einen Schlaufe des Haltebandes in Wirkverbindung gebracht werden. Das Halteband ist vorteilhaft ein Gurtband, wie dieses beispielsweise für allgemein bekannte Zurrgurte, Spanngurte oder Ringgurte verwendet wird. Als Material für das Halteband wird beispielsweise Polyester, Polypropylen, Nylon, Kevlar oder Mischungen daraus verwendet.

Gemäß einer bevorzugten Weiterentwicklung der Erfindung weist das Positionierelement einen Bandkontaktabschnitt mit einer Oberseite und einer Unterseite sowie zumindest zwei sich von dem Bandkontaktabschnitt weg erstreckende Halteabschnitte oder Haltestege auf. Die wenigstens eine Schlaufe des Haltebandes erstreckt sich zumindest abschnittsweise im Wesentlichen von der Oberseite des Bandkontaktabschnittes weg. Die Unterseite des Bandkontaktabschnittes ist dem Basiselement, insbesondere dem Bodenbereich des Basiselementes zugewandt. Die Halteabschnitte erstrecken sich vorteilhaft zumindest abschnittsweise an den jeweiligen Längsseiten des Bandkontaktabschnittes entlang.

Vorteilhaft weisen die Halteabschnitte eine identische in Längsrichtung des Positionierelementes betrachtete Länge auf, wie der Bandkontaktabschnitt. Es ist jedoch auch denkbar, dass die Halteabschnitte in Längsrichtung des Positionierelementes betrachtet länger oder kürzer sind als der Bandkontaktabschnitt. Es ist denkbar, dass der Positionierabschnitt in Gestallt eines planaren Bleches ausgestaltet ist, bei welchem der Bandkontaktabschnitt stufenlos in die Halteabschnitte übergeht. Es ist alternativ ebenfalls denkbar, dass der Bandkontaktabschnitt zumindest abschnittsweise im Wesentlichen **U-**förmig ausgebildet ist, wobei an den U-Schenkeln des Bandkontaktabschnittes jeweils ein Halteabschnitt ausgebildet ist, welcher sich vom jeweiligen U-Schenkel nach außen weg erstreckt.

Es ist weiterhin vorteilhaft möglich, dass das Positionierelement im Bereich des Bandkontaktabschnittes eine Mehrzahl an Aussparungen aufweist, welche in Längsrichtung des Positionierelementes gleichmäßig beabstandet zueinander verteilt, ausgebildet sind. Das bedeutet, dass eine Mehrzahl an Aussparungen, insbesondere wenigstens zwei, vorteilhaft mehr als zwei Aussparungen derart im Bandkontaktabschnitt ausgebildet sind, dass die jeweilige Aussparung sich ausgehend von der Oberseite des Bandkontaktabschnittes zur Unterseite des Bandkontaktabschnittes erstreckt. Die Aussparungen sind vorteilhaft derart ausgestaltet, dass das Halteband durch die Aussparungen hindurchgreift bzw. hindurch gefädelt ist. Vorteilhaft erzeugt bzw. generiert das Positionierelement mittels der Aussparungen eine partielle Aufteilung des Haltebandes in jeweils schlaufenerzeugbare Abschnitte. Das bedeutet, dass jeweils zwei zueinander benachbart ausgebildete Aussparungen, sprich ein Aussparungspaar, die Bildung einer einzelnen Schlaufe im Halteband ermöglichen. Weist das Positionierelement folglich vier Aussparungen auf, können zwei Schlaufen gebildet werden. Weist das Positionierelement beispielsweise sechs Aussparungen auf, ist es möglich drei Schlaufen zu bilden usw.

Gemäß einer Weiterentwicklung der Erfindung ist es möglich, dass die Aussparungen jeweils zumindest eine gebogene Wandung aufweisen, welche sich ausgehend von der Oberseite des Positionierelementes in Richtung der Unterseite des Positionierelementes zumindest teilweise in bzw. durch den Durchgangsbereich (die Öffnung) der entsprechenden Aussparung erstreckt. Die gebogene Wandung weist vorteilhaft eine planare oder zumindest teilweise leicht gebogene Oberfläche auf und erstreckt sich ausgehend von der Oberseite des Bandkontaktabschnittes in Richtung der Unterseite des Bandkontaktabschnittes. Die gebogene Wandung erstreckt sich in die Aussparung, insbesondere zumindest abschnittsweise in die Öffnung der Aussparung hinein. Zwischen der Unterseite der gebogenen Wandung und der Unterseite des Bandkontaktabschnittes wird vorteilhaft ein stumpfer Winkel im Gradmaß größer 90° und kleiner 180° ausgebildet. Es ist denkbar, dass die jeweiligen Aussparungen zwei gebogene Wandungen der zuvor genannten Art aufweisen, die sich zumindest abschnittsweise zueinander gewandt zumindest abschnittsweise in den Durchgangsbereich der Aussparung hinein erstrecken oder zumindest abschnittsweise durch den Durchgangsbereich der jeweiligen Aussparung hindurch erstrecken. Die wenigstens eine gebogene Wandung, vorteilhaft die beiden gebogenen Wandungen der jeweiligen Aussparung erstrecken sich im Wesentlichen in Breitenrichtung des Positionierelementes, insbesondere des Bandkontaktabschnittes. Es ist denkbar, dass die wenigstens eine gebogene Wandung einteilig oder einstückig mit dem Bandkontaktabschnitt ausgebildet ist. Vorteilhaft ist es denkbar, dass die wenigstens eine gebogene Wandung durch einen Stanzprozess entstanden ist. Vorteilhaft dienen die wenigstens eine gebogene Wandung bzw. beide gebogenen Wandungen unter anderem zur Verspannung des Haltebandes sowie zur Aufbringung zusätzlicher Reibkräfte.

Es ist vorteilhaft möglich, dass das Halteband derart durch die Aussparungen gefädelt ist, dass sich das Halteband zumindest abschnittsweise im Wesentlichen mäanderförmig entlang der Längsrichtung des Positionierelementes erstreckt. Vorteilhaft erstreckt sich dabei das Halteband durch jede Aussparung hindurch und verläuft abschnittsweise entlang der Oberseite des Bandkontaktabschnittes und abschnittsweise entlang der Unterseite des Bandkontaktabschnittes, besonders vorteilhaft abwechselnd. Hierdurch ist es in einfacher Weise möglich das Halteband in das Positionierelement einzubringen bzw. dieses an dem Positionierelement anzuordnen und bei Bedarf (Beschädigung oder Zerstörung des Haltebandes) auch auszuwechseln.

Besonders vorteilhaft zeichnet sich die Haltevorrichtung durch eine einfache und kostengünstige Instandsetzung bzw. Reparatur aus, insbesondere alle Bestandteile der Haltevorrichtung schnell und einfach demontiert, mittels Ersatzteile ersetzt und die gesamte Haltevorrichtung derart repariert wieder in den Einsatz gebracht werden kann. Dies ist dienlich für eine ressourcenschonende Kreislaufwirtschaft.

Gemäß einer weiteren vorteilhaften Ausgestaltung der Erfindung weist das Basiselement einen zumindest teilweise, vorteilhaft vollständig geschlossenen Boden sowie zwei vom Boden weg erstreckende Wandungen auf, wobei die Wandungen jeweils einen äußeren Vorsprung und einen zwischen dem äußeren Vorsprung und dem Boden befindlichen inneren Vorsprung aufweisen, wobei der jeweilige innere Vorsprung und der jeweilige äußere Vorsprung sich jeweils ausgehend von der jeweiligen Wandung zueinander hin erstrecken. Die Wandungen erstrecken sich vorteilhaft zumindest abschnittsweise orthogonal vom Boden des Basiselementes in eine gemeinsame Richtung, insbesondere in Höhenrichtung des Basiselementes, insbesondere in Höhenrichtung der Haltevorrichtung weg. Jede der Wandungen weist zwei Vorsprüngen, einen äußeren Vorsprung und einen inneren Vorsprung auf. Die Vorsprünge sind in Form von Nasen, Stegen, Auskragungen oder in vergleichbarer Gestalt ausgebildet und erstrecken sich zumindest abschnittsweise, vorteilhaft vollständig, in Längsrichtung des Basiselementes bzw. der Haltevorrichtung betrachtet entlang des Basiselementes. Vorteilhaft weist der jeweilige äußere Vorsprung eine sich in Breitenrichtung des Basiselementes bzw. der Haltevorrichtung größere erstreckende Breite auf als der jeweilige innere Vorsprung. Damit überdeckt der an einer Wandung ausgebildete äußere Vorsprung den an der gleichen Wandung ausgebildeten inneren Vorsprung. Die Vorsprünge, die Wandungen und der Boden des Basiselementes sind vorteilhaft einteilig oder einstückig ausgebildet und weisen das gleiche Material bzw. die gleiche Materialzusammensetzung auf. Der Boden des Basiselements kann vollständig geschlossen sein. Das bedeutet, dass weder Bohrungen bzw. Aussparungen oder Löcher vorhanden sind. Das erhöht die Stabilität des Basiselementes. Ist jedoch beispielsweise eine lösbare Anordnung der Haltevorrichtung an einem Boden, einer Decke oder einer Wandung eines Transportmittels erforderlich, wie oben beschrieben, ist es denkbar, dass der Boden hierfür entsprechende Bohrungen, Öffnung etc. aufweist.

Vorteilhaft ist zwischen dem inneren Vorsprung und dem äußeren Vorsprung einer Wandung ein Aufnahmebereich gebildet, in welchen ein Halteabschnitt des Positionierelementes zumindest abschnittsweise eingreift. Vorteilhaft wird der entsprechende Halteabschnitt des Positionierelementes in dem entsprechenden Aufnahmebereich gleitend geführt. Des Weiteren dient der entsprechende Aufnahmebereich des Basiselementes dazu ein ungewolltes Entfernen oder Herausbewegen des Positionierelementes aus der funktionstechnisch relevanten Position im bzw. am Basiselement zu verhindern. Der jeweilige Aufnahmebereich ist beispielsweise vergleichbar zu einer Nut ausgebildet, welche sich durch die Ausprägung von äußerem Vorsprung und innerem Vorsprung einer Wandung bildet.

Gemäß einer Ausgestaltung der Haltevorrichtung ist es möglich, dass wenigstens ein distales Ende (bzw. ein distaler Endabschnitte) des Haltebandes an einem distalen Ende (bzw. an einem distalen Endbereich) des Positionierelementes rückläufig geführt ist. Es ist ebenfalls denkbar, dass beide distalen Enden (bzw. beide distalen Endabschnitte) des Haltebandes an den jeweiligen distalen Enden (bzw. an den distalen Endbereichen) des Positionierelementes rückläufig geführt sind. In einer derartigen Ausgestaltung der Haltevorrichtung ist es vorteilhaft denkbar, dass das Halteband nicht mit dem Basiselement verbunden ist. Hierdurch ist es vorteilhaft möglich das Positionierelement in einfacher Weise entlang des Basiselementes zu verschieben, insbesondere wenn das Positionierelement in Längsrichtung der Haltevorrichtung betrachtet, kleiner dimensioniert ist als das Basiselement. Des Weiteren kann das Halteband ohne Verwendung weiterer (zusätzlicher) Bauteile zum Gebrauch positioniert werden. Vorteilhaft dient eine derartige Anordnung des Haltebandes auch dem einfachen Austausch des Haltebandes beispielsweise aufgrund einer Beschädigung dessen, ohne das weitere (zusätzliche) Bauteile demontiert werden müssen. Hierfür wird das wenigstens eine distale Ende (bzw. der wenigstens eine distale Endabschnitt) des Haltebandes in einfacher Weise am entsprechenden distalen Ende des Positionierelementes, insbesondere des Bandkontaktabschnittes des Positionierelementes, nach unten umgeschlagen, zumindest durch die vorletzte Aussparung wieder unterhalb des dort befindlichen Haltebandabschnittes von der Unterseite nach oben zur Oberseite bis zur davorliegenden Aussparung geführt und von dort durch diese (drittletzte) Aussparung wieder in Richtung der Unterseite geführt. Hierdurch kommt es vorteilhaft zu einer Selbstklemmung des Haltebandes. Eine derartige Rückführung des Haltebandes, insbesondere des distalen Endes bzw. des distalen Endabschnittes des Haltebandes, kann auch noch über weitere Aussparungen hinweg erfolgen.

Gemäß einer alternativen Ausgestaltung der Haltevorrichtung ist es möglich, dass wenigstens ein distales Ende (bzw. wenigstens ein distaler Endabschnitt) des Haltebandes an ein Fixierelemente fixiert ist, welches in einem distalen Endbereich des Basiselementes ausgebildet oder angeordnet ist. Es ist alternativ denkbar, dass beide distalen Enden (bzw. beide distalen Endabschnitte) des Haltebandes jeweils an Fixierelementen fixiert sind, welche in einem jeweiligen distalen Endbereich des Basiselementes ausgebildet oder angeordnet sind. Hierbei ist es denkbar, dass das wenigstens eine distale Ende bzw. der wenigstens eine distale Endabschnitt des Haltebandes lösbar oder unlösbar mit den Fixierelementen verbunden ist. Das wenigstens eine Fixierelement ist beispielsweise als Haken, Karabiner, Öse oder als einer sich im Wesentlichen in Breitenrichtung des Basiselementes erstreckender Stift, Schraube, Bolzen oder in vergleichbarer Weise ausgebildet. Das wenigstens eine Fixierelement ist derart gestaltet, dass dieses das entsprechende distale Ende bzw. den distalen Endabschnitte des Haltebandes - ohne dieses zu beschädigen oder das Halteband selbst bzw. dessen Funktionalität einzuschränken - hält bzw. arretiert. Es ist denkbar, dass das wenigstens eine distale Ende bzw. der wenigstens eine distale Endabschnitt des Haltebandes um das entsprechende Fixierelement gewickelt und dann vernäht ist oder dass dieser distale Endabschnitt von dem Fixierelement eingeklemmt ist oder dass das Fixierelement sich zumindest abschnittsweise durch das Material des distalen Endes bzw. distalen Endabschnittes des Haltebandes hindurcherstreckt usw. Bei einer lösbaren Verbindung des Haltebandes mit wenigstens einem, vorteilhaft zwei Fixierelementen kann das Halteband selbst in einfacher Weise ohne Beschädigung der Fixierelemente von diesen demontiert und im Falle einer Reparatur ausgetauscht, also wieder in einfacher Weise das neue Halteband montiert werden. In einer unlösbaren Verbindung zwischen Halteband und Fixierelement muss im Falle einer Reparatur das Halteband samt dem wenigstens einen, vorteilhaft zwei Fixierelementen demontiert werden. Auch bei der Verwendung von wenigstens einem Fixierelement, insbesondere von zwei Fixierelementen ist eine gewollte Verschiebung des Positionierelementes innerhalb des Basiselementes, insbesondere entlang der Längsrichtung des Basiselementes möglich.

Ebenfalls möglich ist die Ausgestaltung von wenigstens einer Eingriffsöffnung im Positionierelement. Vorteilhaft sind eine Mehrzahl, insbesondere mehr als zwei, vorteilhaft mehr als drei Eingriffsöffnungen im Positionierelement, insbesondere im Bandkontaktabschnitt des Positionierelementes ausgebildet. Die wenigstens eine Eingriffsöffnung dient vorteilhaft dazu weiteren sekundären Ladungssicherungselementen, wie insbesondere Balken oder Stangen, Halt zur Sicherung der zu transportierenden Ladung zu bieten. In die wenigstens eine Eingriffsöffnung können Eingriffselemente dieser sekundären Ladungssicherungselemente eingreifen und dort gesichert bzw. fixiert werden. Bei Vorliegen einer Mehrzahl an Eingriffsöffnungen sind die Eingriffsöffnungen in Längsrichtung des Positionierelementes, insbesondere in Längsrichtung der Haltevorrichtung gleichmäßig beabstandet zueinander über die gesamte Länge verteilt ausgebildet. Dabei ist vorteilhaft eine Eingriffsöffnung zwischen zwei Aussparungen ausgeprägt. Besonders vorteilhaft ist in jedem Bereich des Bandkontaktabschnittes zwischen den Aussparungen jeweils eine Eingriffsöffnung ausgebildet. Die wenigstens eine Eingriffsöffnung ist dabei beispielsweise in Gestalt einer Bohrung, insbesondere einer Durchgangsbohrung ausgestaltet. Auch ist es denkbar, dass die wenigstens eine Eingriffsöffnung einen zumindest teilweise oder vollständig geschlossenen Boden oder Vertiefung aufweist.

Es ist des Weiteren denkbar, dass ein Transpondersystem zur Überwachung und Nachverfolgung der Position der Haltevorrichtung etabliert ist. Hierfür wird insbesondere im Bereich des Basiselementes oder des Positionierelementes ein Sender installiert, beispielsweise in Gestalt eines Beacon, welcher in regelmäßigen Abständen Signale an einen Empfänger sendet. Der Empfänger, beispielsweise in Gestalt eines Trackers, kann vorteilhaft im Transportmittel selbst installiert sein. Damit kann erkannt werden, ob sich die Haltevorrichtung in dem Transportmittel, oder in der Nähe des Transportmittels oder entfernt zum Transportmittel, Letzteres insbesondere, wenn kein Signal des Senders mehr empfangen wird, befindet.

Es ist des Weiteren ein Verfahren zumindest zum Sichern einer mit einem Transportmittel zu transportierenden Ladung mittels einer Haltevorrichtung gemäß der vorgenannten Art beansprucht. Das erfindungsgemäße Verfahren zeichnet sich zumindest durch die folgenden Schritte aus:
- Anordnen der Haltevorrichtung im oder am Transportmittel
- Bildung wenigstens einer Schlaufe im Halteband durch Ziehen eines sich an der Oberseite des Positionierabschnittes, insbesondere an der Oberseite des Bandkontaktabschnittes befindlichen sichtbaren Kontaktabschnittes des Haltebandes und
- Einhängen bzw. Einspannen von sekundären Ladungssicherungselementen in die wenigstens eine Schlaufe.

Wie bereits zuvor ausgeführt, ist es denkbar, dass die Haltevorrichtung in Aufnahmemittel bzw. Aufnahmeeinrichtungen bzw. Aufnahmevorrichtungen von insbesondere Rungen eines Transportmittels oder Anhängers eingebracht wird. Unter dem Begriff des Transortmittels fallen nicht nur die Transportmittel, wie Straßenverkehrsmittel, Schienenverkehrsmittel, Luftverkehrsmittel, Wasserverkehrsmittel etc., sondern insbesondere auch deren Anhänger und Aufbauten. Diese Aufnahmemittel halten die Haltevorrichtung zumindest während des Sicherns der Last bzw. Ladung in Position und verhindern vorteilhaft ebenfalls eine ungewollte Entnahme bzw. ein ungewolltes Verrutschen der Haltevorrichtung aus deren Sicherungsposition.

Es ist alternativ denkbar, dass die Haltevorrichtung an den Wänden, dem Boden und/oder der Decke des Laderaumes des Transportmittels bzw. eines Anhängers eines Transportmittels lösbar oder unlösbar, wie bereits zuvor beschrieben, angeordnet wird.

Es ist des Weiteren denkbar, dass vor dem Verfahrensschritt des Einhängens wenigstens eines sekundären Ladungssicherungselementes in die zumindest eine Schlaufe im Halteband, wie beispielsweise ein Haken eines Zurrmittels, wie eines Zurrbandes oder eines Netzes, bzw. vor dem Verfahrensschritt des Bildens der wenigstens einen Schlaufe, das Positionierelement in Längsrichtung des Basiselementes entlang des Basiselementes verschoben wird. Dieser Verfahrensschritt ist insbesondere dann möglich, wenn das Positionierelement eine sich in Längsrichtung der Haltevorrichtung erstreckende geringere Länge aufweist als die sich in Längsrichtung des Halteelementes erstreckende Länge des Basiselementes.

Vorteilhaft nach dem Verfahrensschritt des Verschiebens des Positionierelementes relativ zum Basiselement bzw. nach dem Verfahrensschritt des Anordnens der Haltevorrichtung im oder am Transportmittel (insbesondere, wenn der Verfahrensschritt des Verschiebens nicht ausgeführt werden kann oder soll), ist es möglich einen für die Sicherung der zu transportierenden Ladung geeigneten Haltebandabschnitt (einen der sichtbaren Kontaktabschnitte) des Haltebandes im Bereich des Positionierelementes, insbesondere im Bereich des Bandkontaktabschnittes des Positionierelementes auszuwählen. Das bedeutet, dass aus den auf der Oberseite des Bandkontaktabschnittes sichtbaren Kontaktabschnitten des Haltebandes wenigstens eine Schlaufe, vorteilhaft zwei oder mehr Schlaufen gebildet werden können, um sekundäre Ladungssicherungselemente anzuordnen. Es ist denkbar, dass bei der Bildung bzw. Erzeugung nur einer Schlaufe im Halteband diese Schlaufe eine größere dimensionale Ausprägung aufweist, als wenn im Halteband zwei oder mehr Schlaufen ausgebildet werden. Je nach Position der zu sichernden Ladung im Laderaum des Transportmittels kann demnach die Haltevorrichtung individuell und variabel angepasst werden. Das bedeutet, dass die Haltevorrichtung beispielsweise individuell in einer erforderlichen Höhe des Laderaumes beispielsweise zwischen zwei Rungen platziert werden kann, wobei hier nur die Aufnahmemittel der Rungen die Variabilität durch deren eigene Anordnung begrenzen. Ist eine sich nahe am Boden des Laderaumes zu sichernde Ladung befindlich, wird die Haltevorrichtung vorteilhaft in Bodennähe platziert. Erstreckt sich die Ladung weit bis unter die Decke im Laderaum, ist es ebenfalls möglich eine Haltevorrichtung in Bodennähe zu platzieren und eine weitere Haltevorrichtung in Deckennähe und eventuell noch eine weitere Haltevorrichtung zwischen diesen beiden, um eine hinreichende Sicherung der Ladung während des Transportes zu ermöglichen.

Auch durch die freie Wahl der Position der wenigstens einen Schlaufe des Haltebandes entlang der sich in Längsrichtung der Haltevorrichtung erstreckenden Länge des Positionierelementes ist zudem eine Variabilität bei der Sicherung der Ladung gewährleistet. Hierdurch kann individuell entschieden werden, wo die Schlaufe erzeugt werden soll oder ob mehr als eine Schlaufe zur Sicherung der Ladung erforderlich sind, beispielsweise um mehr als ein sekundäres Ladungssicherungselement (vorteilhaft zwei oder drei sekundäre Ladungssicherungselemente) an einer gemeinsamen Haltevorrichtung anzuordnen.

Vorteilhaft ist es, wenn zwei Haltevorrichtung einander gegenüberliegend im Frachtraum bzw. Laderaum des Transportmittels (bzw. des Anhängers) positioniert sind, wodurch ein Haltevorrichtungspaar erzeugt wird. Dabei ist es unerheblich, ob die beiden Haltevorrichtungen des Haltevorrichtungspaares parallel einander gegenüberliegen oder in deren Höhe vom Frachtraumboden aus betrachtet abweichend. Es wäre auch denkbar, dass eine Haltevorrichtung eines Haltevorrichtungspaares an einer Wandung eines Frachtraumes positioniert ist, während die zweite Haltevorrichtung dieses Haltevorrichtungspaares an der Decke oder dem Boden des Frachtraumes angeordnet ist. Auch die Anordnung einer jeweiligen Haltevorrichtung an der Decke und am Boden zur Bildung eines Haltevorrichtungspaares ist denkbar. Dadurch ist es möglich das sekundäre Ladungssicherungsmittel zwischen diese beiden Haltevorrichtungen des Haltevorrichtungspaares einzuspannen. Weitere ergänzende Führungsschienen bzw. Lastschienen, wie allgemein bekannte Airline-Schienen, sind dann nicht mehr zwingend erforderlich.

Nach oder vor dem Verfahrensschritt der Anordnung von wenigstens einem sekundären Ladungssicherungselement an der Schlaufe des Haltebandes ist es ebenfalls denkbar, dass weitere sekundäre Ladungssicherungselemente, wie beispielsweise Stangen oder Balken in die nicht vom Halteband überdeckten Eingriffsöffnungen in der Haltevorrichtung, insbesondere im Bandkontaktabschnitt der Haltevorrichtung eingebracht werden. Es ist auch denkbar, dass die Haltevorrichtung ohne Nutzung der Schlaufen im Halteband lediglich für die Anordnung von Stangen und Balken etc. genutzt wird. Dies erhöht wiederum die individuelle und flexible Nutzung der Haltevorrichtung, da eine Vielzahl an Sicherungsmöglichkeiten zur Verfügung stehen und folglich jedwede Ladung individuell gesichert werden kann.

Bei dem beschriebenen Verfahren ergeben sich sämtliche Vorteile, die bereits zu einer Haltevorrichtung gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Eine erfindungsgemäße Haltevorrichtung wird nachfolgend anhand von Zeichnungen näher erläutert. Es zeigen jeweils schematisch:
- Figur 1: in einer Explosionsansicht einen Ausschnitt einer (ersten oder zweiten) Ausführungsform einer erfindungsgemäßen Haltevorrichtung,
- Figur 2: in einer Draufsicht von oben einen Ausschnitt eines Basiselementes mit Positionierelement einer (ersten oder zweiten) Ausführungsform einer erfindungsgemäßen Haltevorrichtung,
- Figur 3: die Querschnittsdarstellung des in der Figur 2 gezeigten Ausschnittes,
- Figur 4: die Längsschnittdarstellung des in der Figur 2 gezeigten Ausschnittes,
- Figur 5: die perspektivische Ansicht des in der Figur 2 gezeigten Ausschnittes,
- Figur 6: in einer Draufsicht von oben der in der Figur 1 gezeigte Ausschnitt,
- Figur 7: die Längsschnittdarstellung des in der Figur 6 gezeigten Ausschnittes,
- Figur 8: eine Seitenansicht des in der Figur 6 gezeigten Ausschnittes,
- Figur 9: in einer Explosionsansicht ein Ausschnitt einer ersten Ausführungsform einer erfindungsgemäßen Haltevorrichtung,
- Figur 10: in einer perspektivischen Ansicht der in der Figur 9 gezeigte Ausschnitt,
- Figur 11: eine perspektivische Ansicht eines Ausschnittes einer weiteren, insbesondere zweiten Ausführungsform einer erfindungsgemäßen Haltevorrichtung,
- Figur 12: in einer Draufsicht von oben der in der Figur 11 gezeigte Ausschnitt, und
- Figur 13: eine seitliche Schnittdarstellung des in den Figuren 11 und 12 gezeigten Ausschnittes.

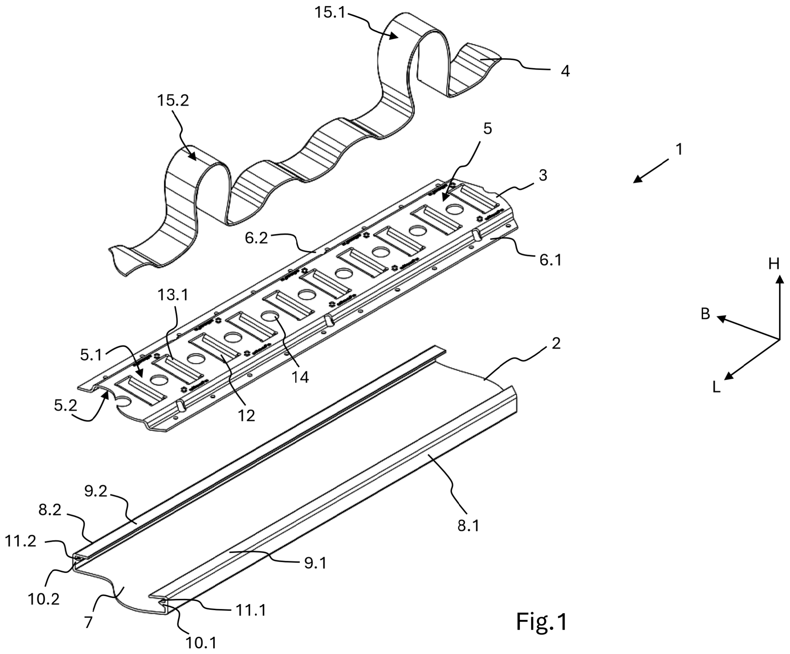

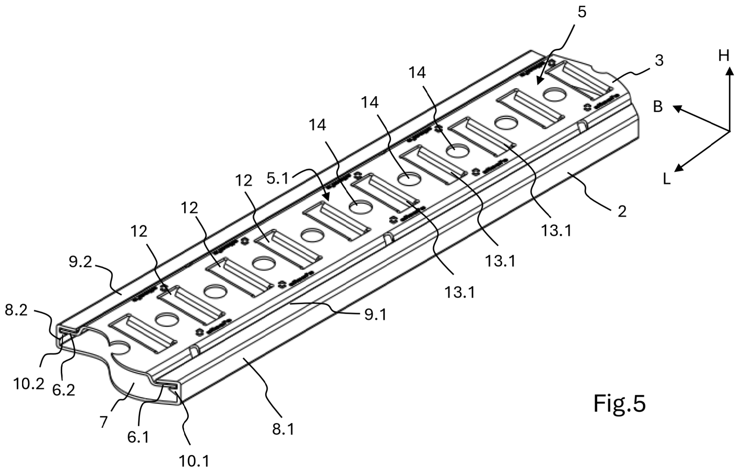

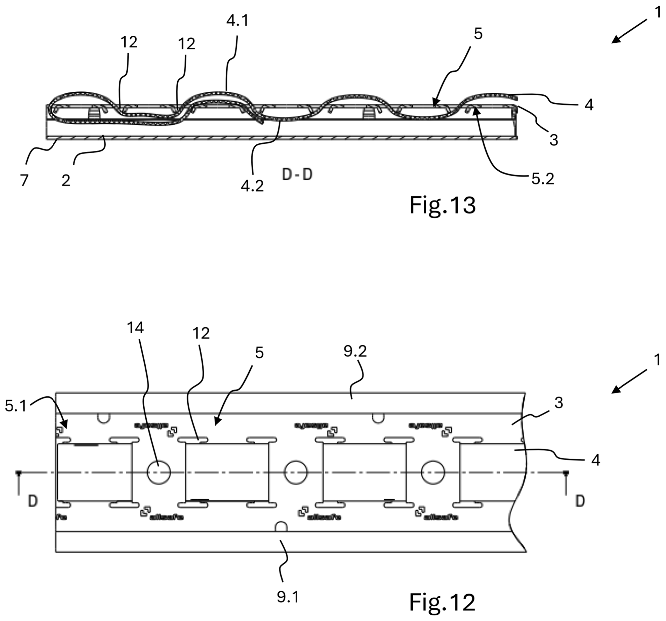

Elemente mit gleicher Funktion und Wirkungsweise sind in den Fig. 1 bis 13 jeweils mit denselben Bezugszeichen versehen.

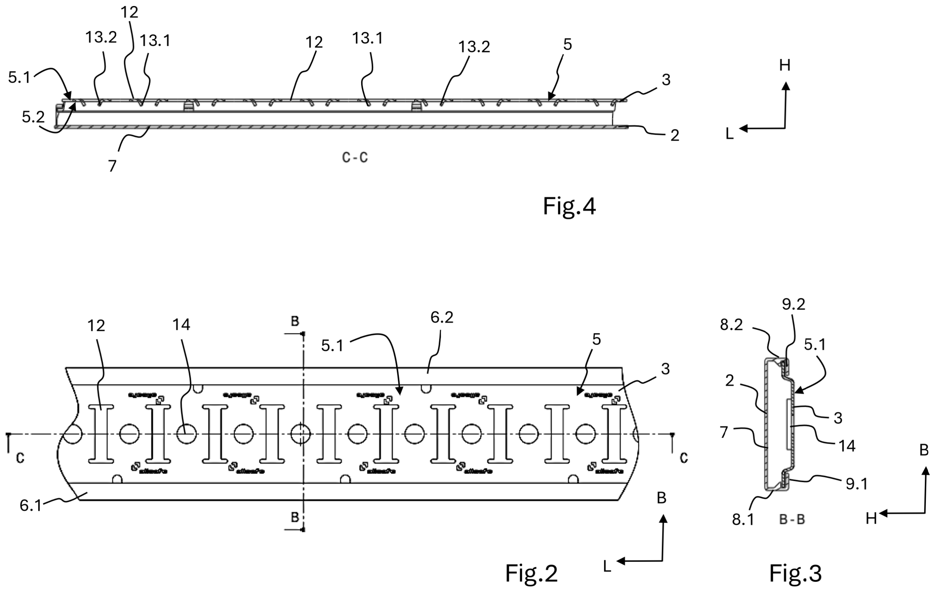

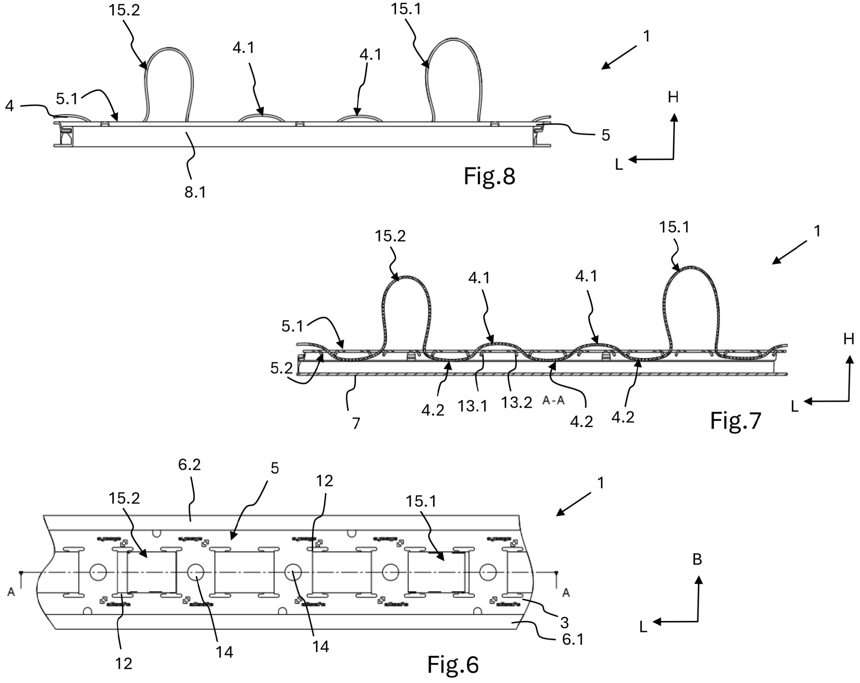

In der Figur 1 ist schematisch in einer Explosionsansicht ein Ausschnitt einer (ersten oder zweiten) Ausführungsform einer erfindungsgemäßen Haltevorrichtung 1 gezeigt. Die Haltevorrichtung 1 weist ein Basiselement 2 sowie ein Positionierelement 3 sowie ein Halteband 4 auf. In den Figuren 2 bis 5 werden das Basiselement 2 sowie das Positionierelement 3 nochmals ohne das Halteband 4 aufgezeigt. In den Figuren 6 bis 8 wird der in der Figur 1 gezeigte Ausschnitt, also die gesamte Haltevorrichtung 1 mit Halteband 4, nochmals in einer Draufsicht, Längsschnittdarstellung und Seitenansicht verdeutlicht.

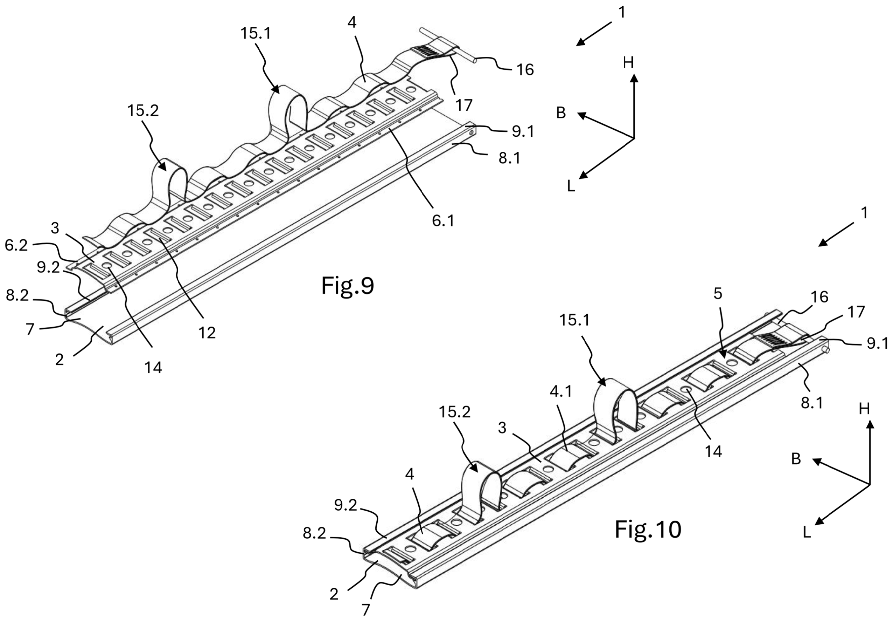

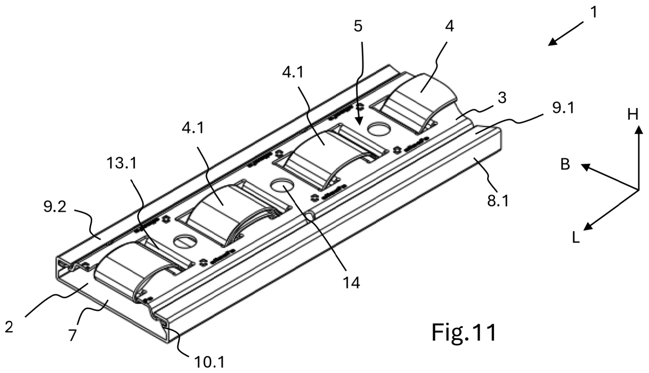

Die in den Figuren 1 bis 8 gezeigten Ausschnitte der einzelnen Elemente, wie dem Basiselement 2, dem Positionierelement 3 und dem Halteband 4 finden sich in einer ersten Ausführungsform einer erfindungsgemäßen Haltevorrichtung 1, wie insbesondere in den Figuren 9 und 10 gezeigt, genauso wie in einer zweiten Ausführungsform einer erfindungsgemäßen Haltevorrichtung 1, wie insbesondere in den Figuren 11 bis 13 gezeigt. Demzufolge werden die in den Figuren 1 bis 8 aufgezeigten Elemente der Haltevorrichtung 1, insbesondere das Basiselement 2, das Positionierelement 3 sowie das Halteband 4 im Nachfolgenden gemeinschaftlich beschrieben. Das Basiselement 2 weist einen Boden 7 (oder Bodenbereich oder Bodenabschnitt), insbesondere einen vollständig geschlossenen Boden 7, also ohne Aussparungen, Bohrungen, Öffnungen etc. auf. Ausgehend vom Boden 7 erstrecken sich zwei Wandungen 8.1 und 8.2 im Wesentlichen zumindest abschnittsweise parallel zueinander und zumindest im Wesentlichen orthogonal vom Boden 7 bzw. der Bodenfläche des Bodens 7 weg. Beide Wandungen 8.1, 8.2 sind an den Längsseiten des Bodens 7 ausgebildet. Mit Boden 7 und Wandungen 8.1, 8.2 weist das Basiselement 2 eine im Wesentlichen U-förmige Gestalt auf. An den entsprechenden Wandungen 8.1, 8.2, welche sich, wie in der Ausführungsform der Figur 1 gezeigt, vollständig entlang der Längsseiten des Bodens 7 in gesamter Länge des Basiselementes 2 erstrecken, sind jeweils Vorsprünge 9.1, 9.2, 10.1, 10.2 ausgebildet. An jeder Wandung 8.1, 8.2 ist ein äußerer Vorsprung 9.1, 9.2 sowie ein innerer Vorsprung 10.1, 10.2 ausgebildet. Die äußeren Vorsprünge 9.1 und 9.2, sprich der erste äußere Vorsprung 9.1 und der zweite äußere Vorsprung 9.2 bzw. die inneren Vorsprünge, sprich der erste innere Vorsprung 10.1 und der zweite innere Vorsprung 10.2 liegen sich im Wesentlichen in Höhenrichtung H der Haltevorrichtung 1 betrachtet, gegenüber (in gleicher Höhe). Der erste äußere Vorsprung 9.1 erstreckt sich in Richtung des zweiten äußeren Vorsprunges 9.2 und vice versa. Der erste innere Vorsprung 10.1 erstreckt sich in Richtung des zweiten inneren Vorsprunges 10.2 und vice versa. Die äußeren Vorsprünge 9.1, 9.2 weisen eine sich in Breitenrichtung B des Basiselementes 2 bzw. der Haltevorrichtung 1 dimensional größere Erstreckung bzw. Größe bzw. Breite auf, als die inneren Vorsprünge 10.1, 10.2. In Betrachtung von oben auf das Basiselement 2 überdecken die äußeren Vorsprünge 9.1, 9.2 folglich die inneren Vorsprünge 10.1, 10.2. Vorteilhaft sind die inneren Vorsprünge 10.1, 10.2 sowie die äußeren Vorsprünge 9.1, 9.2 jeweils in Gestalt eines Steges oder Absatzes oder einer nach innen ragenden Wandung ausgebildet. Die äußeren Vorsprünge 9.1, 9.2 und die inneren Vorsprünge 10.1, 10.2 erstrecken sich in Längsrichtung L des Basiselementes 2 vorteilhaft vollständig über dessen gesamte Länge. Es ist jedoch auch denkbar, dass sich die äußeren Vorsprünge 9.1, 9.2 und/oder die inneren Vorsprünge 10.1, 10.2 nur teilweise in Längsrichtung L betrachtet entlang der entsprechenden Wandungen 8.1, 8.2 erstrecken.

Wie insbesondere in den Figur 1, 3 und 5 ersichtlich, ist zwischen dem ersten äußeren Vorsprung 9.1 und dem ersten inneren Vorsprung 10.1, welche gemeinschaftlich ein erstes Vorsprungspaar bilden, ein erster Aufnahmebereich 11.1 gebildet. Zwischen dem zweiten äußeren Vorsprung 9.2 und dem zweiten inneren Vorsprung 10.2, welche gemeinschaftlich ein zweites Vorsprungspaar bilden, ist ein zweiter Aufnahmebereich 11.2 gebildet. Der erste Aufnahmebereich 11.1 bzw. der zweite Aufnahmebereich 11.2 sind vorteilhaft in Gestalt einer Vertiefung bzw. einer Nut ausgebildet. Die Aufnahmebereiche 11.1, 11.2 erstrecken sich vornehmlich entlang der gesamten sich in Längsrichtung L des Basiselementes 2 erstreckenden Wandungslänge, insbesondere entlang der gesamten Länge der gebildeten Vorsprungspaare, insbesondere dem ersten Vorsprungspaar und dem zweiten Vorsprungspaar. Es ist jedoch auch denkbar, dass sich die Aufnahmebereiche 11.1, 11.2 nur abschnittsweise entlang der gesamten sich in Längsrichtung L des Basiselementes 2 erstreckenden Wandungslänge erstrecken. Die Aufnahmebereiche 11.1, 11.2 dienen vorteilhaft dazu die Halteabschnitte 6.1 bzw. 6.2 des Positionierelementes 3 zumindest abschnittsweise aufzunehmen.

Das in den Figuren 1 bis 8 gezeigte Positionierelement 3 weist einen Bandkontaktabschnitt 5 mit einer Oberseite 5.1 und einer Unterseite 5.2 auf. Der Bandkontaktabschnitt 5 ist derjenige Bereich bzw. Abschnitt des Positionierelementes 3, welcher zumindest abschnittsweise in unmittelbarem Kontakt mit dem Halteband 4 (siehe insbesondere Figuren 1, 6 und 7) ist. Eine Mehrzahl an Aussparungen 12 ist im Bandkontaktabschnitt 5 des Positionierelementes 3 ausgebildet. Die Aussparungen 12 verteilen sich in Längsrichtung L des Positionierelementes 3 betrachtet gleichmäßig beabstandet zueinander im Wesentlichen über die gesamte Länge des Positionierelementes 3 bzw. dessen Bandkontaktabschnittes 5. Vorteilhaft weisen die Aussparungen 12 eine sich in Breitenrichtung B erstreckende Breite auf, welche zumindest der Breite des Haltebandes 4 entspricht. Hierdurch wird vorteilhaft das Einbringen des Haltebandes 4 in die Aussparungen 12 prozesssicher ermöglicht und ein Einschneiden, Verknicken oder eine anderweitige Behinderung der Bedienung oder Beschädigung des Haltebandes 4 vermieden. Die Aussparungen 12 weisen eine im wesentlichen rechteckförmige Gestalt auf. Es sind jedoch auch andere, abweichende Gestaltungen, wie Langlochausführungen, ovalen Ausführungen oder quadratischen Ausführungen denkbar. Jede Aussparung 12 weist vorteilhaft zumindest eine gebogene (abgeknickte oder abgewinkelte) Wandung 13.1, besonders vorteilhaft zwei gebogene Wandungen 13.1, 13.2 auf. Die erste gebogene Wandung 13.1 erstreckt sich ausgehend von der Oberseite 5.1 des Bandkontaktabschnittes 5 in die Öffnung der Aussparung 12 hinein, insbesondere durch die Öffnung der Aussparung 12 hindurch, in Richtung der Unterseite 5.2, insbesondere entlang der sich in Breitenrichtung B erstreckenden Länge (Breite) der Aussparung 12 bzw. der Kante der Aussparung 12. Entsprechend verhält es sich mit der zweiten gebogenen Wandung 13.2, sofern diese ebenfalls ausgebildet ist. Die zweite gebogene Wandung 13.2 erstreckt sich im Wesentlichen entlang der Aussparung 12, insbesondere der Kante der Aussparung 12, welcher der Kante der Aussparung 12 gegenüberliegt, an welcher sich die erste gebogene Wandung 13.1 erstreckt. Vorteilhaft erstreckt sich die erste gebogene Wandung 13.1 und/oder die zweite gebogene Wandung 13.2 in einem definierten Winkel ausgehend von der Oberseite 5.1 zur Unterseite 5.2 des Bandkontaktabschnittes 5. Die wenigstens eine gebogene Wandung 13.1 dient vorteilhaft zur Aufbringung einer definierten Reibkraft auf das Halteband 4. Hierdurch wird es zum einen ermöglicht, dass das Halteband 4 noch derart beweglich ist, dass eine gewollte Schlaufenbildung ermöglicht ist und gleichzeitig die wenigstens eine erzeugte Schlaufe des Haltebandes 4 in einer gewollten Position verbleibt. Es ist denkbar, dass insbesondere der Bandkontaktabschnitt 5 eine U-förmige Gestalt aufweist.

Wie insbesondere in den Figuren 1 bis 5 ersichtlich erstrecken sich ausgehend von dem Bandkontaktabschnitt 5 des Positionierelementes 3 zwei Halteabschnitte 6.1, 6.2. Die Halteabschnitte 6.1, 6.2 sind im Wesentlichen in Gestalt von Stegen, Flügeln oder Auskragungen ausgebildet. Der erste Halteabschnitt 6.1 erstreckt sich in Längsrichtung L des Positionierelementes 3 und folglich in Längsrichtung L der Haltevorrichtung 1 betrachtet entlang der Längskante des Bandkontaktabschnittes 5 und erstreckt sich in Breitenrichtung B betrachtet vom Bandkontaktabschnitt 5 weg. Entsprechendes gilt für den zweiten Halteabschnitt 6.2, welcher an der gegenüberliegenden Längskante des Bandkontaktabschnittes 5 ausgebildet ist. Die Halteabschnitte 6.1, 6.2 und der Bandkontaktabschnitt 5 bilden das Positionierelement 3 und können einteilig oder einstückig ausgebildet sein. Es ist denkbar, dass sich die Halteabschnitte 6.1, 6.2 vollständig, nur abschnittsweise oder unterbrochen in Längsrichtung L betrachtet entlang des Bandkontaktabschnittes 5, insbesondere zu beiden Seiten (in Längsrichtung L betrachtet) des Bandkontaktabschnittes 5 erstrecken. Es ist ebenfalls denkbar, dass der erste Halteabschnitt 6.1 eine zum zweiten Halteabschnitt 6.2 unterschiedliche Erstreckung aufweist. Es ist des Weiteren denkbar, dass der Bandkontaktabschnitt 5 und die jeweiligen Halteabschnitt 6.1, 6.2 in einer Ebene in Breitenrichtung B betrachtet, liegen. Letzteres ist insbesondere dann der Fall, wenn der Bandkontaktabschnitt 5 keine U-Form aufweist, sondern vielmehr aus einem ebenen Werkstück besteht. Es ist dazu abweichend auch denkbar, dass die jeweiligen Halteabschnitte 6.1, 6.2, in einer zum Bandkontaktabschnitt 5 abweichenden Ebene ausgebildet sind, insbesondere, wenn der Bandkontaktabschnitt 5 im Wesentlichen zumindest abschnittsweise eine U-förmige Gestalt aufweist. In letzterem Fall erstrecken sich die jeweiligen Halteabschnitt 6.1, 6.2 dann ausgehend von den U-Schenkeln des Bandkontaktabschnitte 5 nach außen weg.

Wie insbesondere in den Figuren 1, 2, 5 und 6 ersichtlich, weist das Positionierelement 3, insbesondere der Bandkontaktabschnitt 5 zumindest eine Eingriffsöffnung 14, vorteilhaft eine Mehrzahl an Eingriffsöffnungen 14 auf. Die Eingriffsöffnungen 14 sind in Längsrichtung L betrachtet gleichmäßig beabstandet zueinander verteilt entlang des Bandkontaktabschnittes 5 ausgebildet. Es ist denkbar, dass die wenigstens eine Eingriffsöffnung 14 in Form eines Loches, einer Bohrung, insbesondere einer Durchgangsbohrung oder in vergleichbarer Gestalt ausgebildet ist. Dabei kann die Eingriffsöffnung 14 eine kreisrunde Form, eine ovale Form oder auch eine eckige Form aufweisen. Die Eingriffsöffnung 14 dient beispielsweise dazu weitere hier nicht gezeigte sekundäre Ladungssicherungselemente aufzunehmen, die derart ausgebildet sind, dass diese entsprechend zumindest abschnittsweise in die Eingriffsöffnungen eingreifen, um dort verspannt, verriegelt oder eingerastet zu werden.

Das insbesondere in den Figuren 1, 6, 7 und 8 dargestellte Halteband 4 ist vorteilhaft ein synthetisches Gurtband, welches aus einem synthetischen Material besteht bzw. dieses aufweist. Es ist langlebig und strapazierfähig und gleichzeitig derart flexibel, dass eine gewollte Schlaufenbildung problemlos ermöglicht werden kann. In den genannten Figuren ist das Halteband 4 mit zwei Schlaufen 15.1, 15.2, insbesondere einer ersten Schlaufe 15.1 und einer sich in Längsrichtung L betrachtet beabstandet von der ersten Schlaufe 15.1 ausgebildeten zweiten Schlaufe 15.2. abgebildet. Es ist denkbar, dass mit demselben Halteband 4 bzw. mit derselben Haltevorrichtung 1 auch lediglich eine der Schlaufen 15.1, 15.2 erzeugt wird oder mehr als die beiden abgebildeten Schlaufen 15.1, 15.2, insbesondere drei oder mehr Schlaufen erzeugt werden. Es können auch zwei direkt nebeneinander benachbart liegende sichtbare Kontaktabschnitte 4.1 des Haltebandes 4 zu Schlaufen 15.1, 15.2 ausgebildet werden. Die Erzeugung der Schlaufen 15.1, 15.2 erfolgt in einfacher Weise durch ein Herausziehen des Haltebandes 4 an den für den Bediener greifbaren (sichtbaren) Kontaktabschnitten 4.1 des Haltebandes 4. Das bedeutet an denjenigen Abschnitten des Haltebandes 4, welche sich an der Oberseite 5.1 des Bandkontaktabschnittes 5 entlang erstrecken. Wird lediglich eine Schlaufe 15.1 gebildet, weist diese Schlaufe 15.1 eine größere Schlaufengröße auf als in dem Fall, dass mit dem Halteband 4 zwei oder mehr Schlaufen 15.1, 15.2 gebildet werden. Das begründet sich insbesondere darin, dass das Halteband 4 eine definierte Länge aufweist. Das bedeutet demnach, dass bei einer Erhöhung der Anzahl der gebildeten Schlaufen 15.1, 15.2 pro Halteband 4 die Größe der jeweiligen Schlaufen 15.1, 15.2 abnimmt.

Wie insbesondere in den Figuren 1, 6 und 7 ersichtlich, ist das Halteband 4 alternierend entlang des Bandkontaktabschnittes 5 des Positionierelementes 3 durch die Aussparungen 12 gefädelt. Das bedeutet, dass sich ein sichtbarer (greifbarer) Kontaktabschnitt 4.1 des Haltebandes 4 mit einem nicht sichtbaren (nicht greifbaren) Abschnitt 4.2 des Haltebandes 4 in Längsrichtung L betrachtet abwechselt.

**In** den Figuren 9 und 10 ist ein Ausschnitt einer ersten Ausführungsform einer erfindungsgemäßen Haltevorrichtung 1 aufgezeigt. Diese erste Ausführungsform weist die in den Figu-ren 1 bis 8 beschriebenen Merkmale (welche im Wesentlichen die Grundform der erfindungsgemäßen Haltevorrichtung aufzeigen) gemäß der zugehörigen Figurenbeschreibung auf, sodass diese hinsichtlich der Beschreibung der Figuren 9 und 10 vollumfänglich mit einbezogen wird bzw. werden. Die erste Ausführungsform einer erfindungsgemäßen Haltevorrichtung 1 zeichnet sich dadurch aus, dass das Halteband 4 zumindest an einem distalen Ende, vorteilhaft an beiden distalen Enden, über ein Fixierelement 16 mit dem Basiselement 2 verbunden ist. Das Fixierelement 16 ist vorteilhaft in Gestalt eines Stiftes, einer Schraube, einer Öse oder in vergleichbarer Ausgestaltung ausgebildet, um ein distales Ende oder einen distalen Endabschnitt des Haltebandes 4 aufzunehmen. Hierdurch soll ein ungewolltes Verrutschen oder Lösen des Haltebandes 4 aus dem Positionierelement 3, insbesondere aus dem Basiselement 2 vermieden werden. Das Fixierelement 16 ist vorteilhaft mit dem Basiselement 2 verbunden. Es ist auch denkbar, dass das Fixierelement 16 mit dem Positionierelement 3 oder mit dem Positionierelement 3 und dem Basiselement 4 verbunden ist. Vorteilhaft erstreckt sich das Fixierelement 16 zumindest abschnittsweise, vorteilhaft vollständig in Breitenrichtung B des Basiselementes 2 von der ersten Wandung 8.1 zur zweiten Wandung 8.2. **In** einfacher Weise, beispielsweise bei Ausgestaltung des Fixierelementes 16 als stiftartiges Element, ist es denkbar, dass ein distaler Endabschnitt des Haltebandes 4 in schlingenform vernäht, verklebt oder in vergleichbarer Gestalt gebildet ist, wobei sich das Fixierelement 16 durch diese Schlinge 17 hindurch erstreckt. Es ist auch denkbar, dass die Schlinge 17 von einer hier nicht gezeigten Öse, einem Haken oder einem vergleichbar ausgestalteten Haltemittel als Fixierelement 16 gehalten ist/wird. Es findet vorteilhaft eine formschlüssige Fixierung des Haltebandes 4 am Positionierelement 3, insbesondere am Basiselement 2 statt.

**In** den Figuren **11** bis 13 ist ein Ausschnitt einer weiteren, insbesondere zweiten Ausführungsform einer erfindungsgemäßen Haltevorrichtung 1 aufgezeigt. Diese zweite Ausführungsform weist die in den Figuren 1 bis 8 beschriebenen Merkmale (welche im Wesentlichen die Grundform der erfindungsgemäßen Haltevorrichtung aufzeigen) gemäß der zugehörigen Figurenbeschreibung auf, sodass diese hinsichtlich der Beschreibung der Figuren **11** bis 13 vollumfänglich mit einbezogen wird bzw. werden. Die zweite Ausführungsform einer erfindungsgemäßen Haltevorrichtung 1 zeichnet sich insbesondere dadurch aus, dass zumindest ein distales Ende des Haltebandes 4 bzw. ein distaler Endabschnitt des Haltebandes 4, vorteilhaft beide distalen Enden bzw. beide distalen Endabschnitte des Haltebandes 4 rückläufig entlang des Positionierelementes 3 verlegt bzw. durch die Aussparungen 12 gefädelt ist bzw. sind. Das bedeutet, dass der wenigstens eine distale Endabschnitt des Haltebandes 4 ausgehend von der letzten Aussparung am distalen Endes des Positionierelementes 3 von der Oberseite 5.1 um das distale Ende des Positionierelementes 3, insbesondere des Bandkontaktabschnittes 5 herum in Richtung der Unterseite 5.2 des Bandkontaktabschnittes 5 und dann entlang der Unterseite 5.2 des Bandkontaktabschnittes 5 in Richtung des anderen distalen Endes des Positionierelementes 3 geführt ist. Vorteilhaft erstreckt sich der rückgeführte distale Endabschnitt des Haltebandes 4 zumindest unterhalb entlang des ersten nicht sichtbaren Abschnittes 4.2 des Haltebandes 4. Besonders vorteilhaft erstreckt sich der rückgeführte distale Endabschnitt des Haltebandes 4 bis zum zweiten sichtbaren Kotaktabschnitt 4.1 des Haltebandes 4 ausgehend von dem distalen Ende des Positionierelementes 3 betrachtet, an welchem das Halteband 4 umgeschlagen und rückgeführt ist. Von dort aus erstreckt sich der distale Endabschnitt des Haltebandes 4 durch die Aussparung 12 (zweite Aussparung 12 ausgehend vom distalen Ende des Positionierelementes 3 betrachtet, an welchem das Halteband 4 umgeschlagen und rückgeführt ist) ausgehend von der Unterseite 5.2 zur Oberseite 5.1 des Bandkontaktabschnittes 5 und weiter bis zur nächsten Aussparung 12 und von dort wieder in Richtung der Unterseite 5.2 des Bandkontaktabschnittes 5. Der rückgeführte distale Endabschnitt des Haltebandes 4 verläuft entlang der Oberseite 5.1 des Bandkontaktabschnittes 5 unterhalb des im Positionierelementes 3 eingefädelten Haltebandes 4, insbesondere zwischen dem im Positionierelement 3 eingefädelten Halteband 4 und der Oberseite 5.1 des Bandkontaktabschnittes. Hierdurch wird eine Fixierung des Haltebandes 4 an dem Positionierelement 3 derart bewirkt, dass das Halteband 4 nicht ungewollt aus dem Positionierelement 3 herausgezogen werden kann. Das Halteband 4 sorgt vielmehr für eine Selbstklemmung. Es findet vorteilhaft eine kraftschlüssige Fixierung des Haltebandes 4 am Positionierelement 3 statt.

Es ist ebenfalls denkbar, dass eine weitere Ausführungsform einer erfindungsgemäßen Haltevorrichtung 1 beide oben genannte Konzepte zum Fixieren des Haltebandes 4 aufweist. Damit ist gemeint, dass beispielsweise ein distales Ende bzw. ein distaler Endabschnitt des Haltebandes 4 mittels eines beschriebenen Fixierelementes 16 fixiert ist, wobei das andere distale Ende bzw. der andere distale Endabschnitt des Haltebandes 4 mittels der oben beschriebenen Rückführung durch die Aussparungen 12 fixiert ist.

### Bezugszeichenliste

- 1: Haltevorrichtung
- 2: Basiselement
- 3: Positionierelement
- 4: Halteband
- 4.1: (sichtbarer) Kontaktabschnitt des Haltebandes
- 4.2: (nicht sichtbarer) Abschnitt des Haltebandes
- 5: Bandkontaktabschnitt
- 5.1: Oberseite des Bandkontaktabschnittes
- 5.2: Unterseite des Bandkontaktabschnittes
- 6.1: (erster) Halteabschnitt
- 6.2: (zweiter) Halteabschnitt
- 7: Boden des Basiselementes
- 8.1: (erste) Wandung
- 8.2: (zweite) Wandung
- 9.1: (erster) äußerer Vorsprung
- 9.2: (zweiter) äußerer Vorsprung
- 10.1: innerer Vorsprung
- 10.2: (erster) (zweiter) innerer Vorsprung
- 11.1: (erster) Aufnahmebereich
- 11.2: (zweiter) Aufnahmebereich
- 12: Aussparung
- 13.1: (erste) gebogene Wandung
- 13.2: (zweite) gebogene Wandung
- 14: Eingriffsöffnungen
- 15.1: (erste) Schlaufe
- 15.2: (zweite) Schlaufe
- 16: Fixierelement
- 17: Schlinge

- B: Breitenrichtung
- H: Höhenrichtung
- L: Längsrichtung

## Patentansprüche

1. Haltevorrichtung (1) zumindest zum Sichern einer mit einem Transportmittel zu transportierenden Ladung, wobei die Haltevorrichtung (1)
wenigstens ein Basiselement (2) zumindest zur zeitweisen Anordnung der Haltevorrichtung (1) an dem Transportmittel, sowie
ein zumindest eine Schlaufe (15.1, 15.2) bildendes Halteband (4) und ein wenigstens das Halteband (4) positionierendes und vom Basiselement (2) zumindest abschnittsweise gehaltenes Positionierelement (3) aufweist.

2. Haltevorrichtung (1) gemäß Anspruch 1,
**dadurch gekennzeichnet, dass**
das Positionierelement (3) einen Bandkontaktabschnitt (5) mit einer Oberseite (5.1) und einer Unterseite (5.2) sowie zumindest zwei sich von dem Bandkontaktabschnitt (5) weg erstreckende Halteabschnitte (6.1, 6.2) aufweist.

3. Haltevorrichtung (1) gemäß Anspruch 2,
**dadurch gekennzeichnet, dass**
das Positionierelement (3) im Bereich des Bandkontaktabschnittes (5) eine Mehrzahl an Aussparungen (12) aufweist, welche in Längsrichtung (L) des Positionierelementes (3) gleichmäßig beabstandet zueinander verteilt, ausgebildet sind.

4. Haltevorrichtung (1) gemäß Anspruch 3,
**dadurch gekennzeichnet, dass**
die Aussparungen (12) jeweils zumindest eine gebogene Wandung (13.1, 13.2) aufweisen, welche sich ausgehend von der Oberseite (5.1) des Positionierelementes (3) in Richtung der Unterseite (5.2) des Positionierelementes (5) zumindest teilweise in den Durchgangsbereich der entsprechenden Aussparung (12) hinein erstreckt.

5. Haltevorrichtung (1) gemäß Anspruch 3,
**dadurch gekennzeichnet, dass**
das Halteband (4) derart durch die Aussparungen (12) gefädelt ist, dass sich das Halteband (4) zumindest abschnittsweise im Wesentlichen mäanderförmig entlang der Längsrichtung (L) des Positionierelementes (3) erstreckt.

6. Haltevorrichtung (1) gemäß einem der vorangegangenen Ansprüche,
**dadurch gekennzeichnet, dass**
das Basiselement (2) einen zumindest teilweise geschlossenen Boden (7) sowie zwei vom Boden (7) weg erstreckende Wandungen (8.1, 8.2) aufweist, wobei die Wandungen (8.1, 8.2) jeweils einen äußeren Vorsprung (9.1, 9.2) und einen zwischen dem äußeren Vorsprung (9.1, 9.2) und dem Boden (7) befindlichen inneren Vorsprung (10.1, 10.2) aufweisen, wobei der jeweilige innere Vorsprung (10.1, 10.2) und der jeweilige äußere Vorsprung (9.1, 9.2) sich jeweils ausgehend von der jeweiligen Wandung (8.1, 8.2) zueinander hin erstrecken.

7. Haltevorrichtung (1) gemäß Anspruch 6,
**dadurch gekennzeichnet, dass**
zwischen dem inneren Vorsprung (10.1, 10.2) und dem äußeren Vorsprung (9.1, 9.2) einer Wandung (8.1, 8.2) ein Aufnahmebereich (11.1, 11.2) gebildet ist, in welchen ein Halteabschnitt (6.1, 6.2) des Positionierelementes (3) zumindest abschnittsweise eingreift.

8. Haltevorrichtung (1) gemäß einem der vorangegangenen Ansprüche,
**dadurch gekennzeichnet, dass**
wenigstens ein distales Ende des Haltebandes (4) an einem distalen Ende des Positionierelementes (3) rückläufig geführt ist.

9. Haltevorrichtung (1) gemäß einem der vorangegangenen Ansprüche
**dadurch gekennzeichnet, dass**
wenigstens ein distales Ende des Haltebandes (4) an einem Fixierelement (16) fixiert ist, welches in einem distalen Endbereich des Basiselementes (2) ausgebildet oder angeordnet ist.

10. Verfahren zumindest zum Sichern einer mit einem Transportmittel zu transportierenden Ladung mittels einer Haltevorrichtung (1) gemäß einem der vorangegangenen Ansprüche,
**gekennzeichnet durch zumindest die folgenden Schritte:**
- Anordnen der Haltevorrichtung (1) im oder am Transportmittel,
- Bildung wenigstens einer Schlaufe (15.1, 15.2) im Halteband (4) durch Ziehen eines sich an der Oberseite (5.1) des Positionierabschnittes (3) befindlichen sichtbaren Kontaktabschnittes (4.1) des Haltebandes (4),
- Einhängen von sekundären Ladungssicherungselementen in die wenigstens eine Schlaufe (15.1, 15.2).
